# EUROPÄISCHE PATENTANMELDUNG

(11) **EP 1 189 054 A2**
(43) Veröffentlichungstag der Anmeldung: **20.03.2002**
(21) Anmeldenummer: 01117330.9
(22) Anmeldetag: 18.07.2001
(51) Int. Cl.: G01N 21/958

(54) **Vorrichtung zur Qualitätskontrolle bei thermogeformten Kunststoffteilen**

(30) Priorität: 15.09.2000 DE 10045645
(71) Anmelder: Bayerische Motoren Werke Aktiengesellschaft, 80809 München (DE)
(72) Erfinder: Conze, Michael, 84034 Landshut (DE)

(57) **Zusammenfassung**

Die Erfindung betrifft eine Vorrichtung zur Qualitätskontrolle bei thermogeformten Kunststoffteilen.

Zur online-fähigen Qualitätskontrolle wird eine Vorrichtung vorgeschlagen, mit einer Lichtquelle, einem Detektor, einer Zuführeinrichtung für das Kunststoffteil, womit das Kunststoffteil an zumindest einer kritischen Stelle zwischen der Lichtquelle und dem Detektor automatisch positionierbar ist, und mit einer Auswertevorrichtung, die ein vom Detektor stammendes Signal bewertet.

## Beschreibung

Die Erfindung betrifft eine Vorrichtung zur Qualitätskontrolle bei thermogeformten Kunststoffteilen, um insbesondere fehlerhafte Teile auszusondern.

Bei der Herstellung von geformten, beispielsweise tiefgezogenen Kunststoffelementen, kommt es an kritischen Stellen manchmal zu einer Unterschreitung einer Minimaldicke. Dies birgt die Gefahr in sich, dass das Kunststoffelement an diesen Stellen bricht. Um solch fehlerhafte Kunststoffelemente auszusortieren, kann man beispielsweise eine Wanddickenmessung mit Ultraschall oder auf mechanische Weise vornehmen. Es ist auch bekannt, die Verformlinge gegen eine Lichtquelle zu halten, um zu sehen, ob an bestimmten Stellen das Licht zu sehr durchscheint. An diesen Stellen ist eine geforderte Mindestdicke dann oftmals nicht gegeben. Der Nachteil bei der letzten Methode ist eine nicht online-mäßige Durchführbarkeit. Überdies muss die Transmissionsstärke abgeschätzt werden, was zu einer Fehleinschätzung führen kann.

Im Zusammenhang mit der vorliegenden Erfindung wird überdies auf die US 4,937,449, die DE 39 40 386 sowie die JP 60-49920 hingewiesen.

Aufgabe der vorliegenden Erfindung ist es, eine online-fähige Qualitätskontrolle bei thermogeformten Kunststoffteilen anzugeben, die nicht nur kostengünstig, sondern auch funktionssicher ist.

Diese Aufgabe wird durch die im Anspruch 1 genannten Merkmale gelöst.

Demgemäss werden die Kunststoffteile zwischen einer Lichtquelle und einem Detektor derart platziert, dass zumindest eine kritische Stelle durchleuchtet wird. Der Detektor erzeugt daraufhin ein entsprechendes Transmissionssignal, welches von einer Auswertevorrichtung bewertet wird.

Durch die Verwendung einer Zuführeinrichtung kann das Verfahren automatisch ohne die Einschaltung einer Bedienperson durchgeführt werden. Überdies lässt sich durch die Verwendung eines Detektors die Fehlerquelle ausschließen, dass das Transmissionsverhalten an einer kritischen Stelle falsch eingeschätzt wird.

Die Zuführeinrichtung kann vorzugsweise von einer Steuereinrichtung beaufschlagt werden, die das Kunststoffteil zumindest an zwei programmierbaren Stellen automatisch positioniert. Damit lässt sich das Kunststoffteil punktweise an verschiedenen Stellen abtasten. Natürlich kann eine Abtastung auch über einen bestimmten Bereich erfolgen. Aufgrund des Detektorsignals in diesem Bereich kann dann über eine Aussortierung des entsprechenden Teils entschieden werden.

Die vorliegende Erfindung wird nachfolgend und mit Bezug auf die beiliegenden Zeichnungen näher beschrieben. Die Zeichnungen zeigen in
- Figur 1: ein schematisches Blockdiagramm einer erfindungsgemäßen Vorrichtung zur Durchführung einer Qualitätskontrolle bei thermogeformten Kunststoffteilen und
- Figuren 2a bis 2f: verschiedene Verfahrensschritte bei der Herstellung eines solchen Kunststoffteiles.

Die einfache Ausführungsvariante der vorliegenden Erfindung umfasst eine Lichtquelle 10 und eine Fotozelle 12, welche mit einer Auswerteeinrichtung 20 verbunden ist. Zwischen die Lichtquelle 10 und die Fotozelle 12 wird ein Kunststoffteil 16 derart gehalten, dass eine kritische Stelle 18 genau zwischen Lichtquelle 10 und Fotozelle 12 positioniert ist. Ist die kritische Stelle zu dünn geraten, wird zuviel Licht zu der Fotozelle 12 durchgelassen. Dies wird von der Auswertevorrichtung 20 beurteilt. Im Fall einer zu großen Lichttransmission wird eine entsprechender Schritt eingeleitet, um das Kunststoffelement auszusortieren.

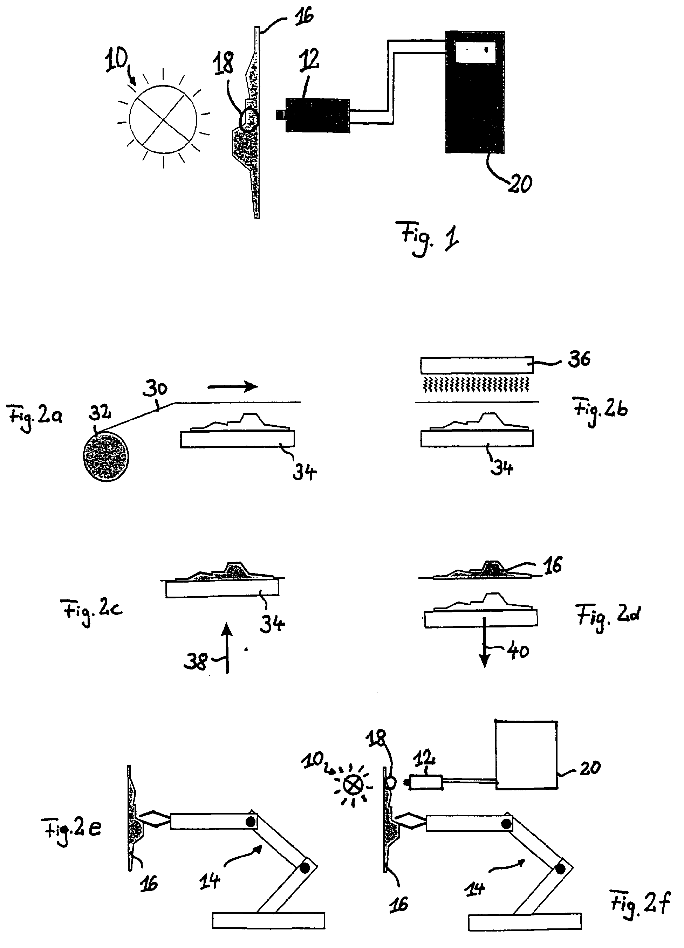

Im Produktionsablauf, welcher nachfolgend anhand der Figuren 2a bis 2f beschrieben wird, lässt sich eine solche Vorrichtung leicht einfügen.

In einem ersten Schritt, gemäß Figur 2a, wird eine Kunststofffolie 30 von einer Rolle 32 abgezogen und über eine Form 34 verbracht.

Mittels einer Heizeinrichtung 36 wird die Folie aufgeheizt, um sie für den Verformprozeß plastisch zu machen (Figur 2b). Beim Formprozeß wird die Form 34 in die Folie 30 gedrückt (Pfeil 38 in Figur 2c), und nach dem Entformen (Pfeil 40 in Figur 2d) entsteht ein in gewünschter Weise geformtes Kunststoffteil 16.

Dieses Kunststoffteil 16 wird von einem Greifarm 14 erfasst und von den übrigen Folienresten abgetrennt (Figur 2 e). Anschließend verbringt der Greifarm 14 das Kunststoffteil 16 derart in eine erfindungsgemäße Vorrichtung, also zwischen die Lichtquelle 10 und die Fotozelle 12, dass die kritische Stelle 18 positionsgenau zu liegen kommt. Durch eine Beleuchtung der kritischen Stelle 18 und eine Bewertung des dadurch entstandenen Transmissionssignals in der Auswertevorrichtung 20 kann dann auf ein fehlerhaftes oder ein fehlerloses Teil geschlossen werden. Natürlich können verschiedene Stellen oder ganze Bereiche des Kunststoffteils abgefahren werden.

Die vorliegende Erfindung ermöglicht somit eine einfache, kostengünstige, funktionssichere sowie online-fähige Qualitätskontrolle bei thermogeformten Kunststoffteilen.

Natürlich sind auch andere Ausgestaltungen der vorliegenden Erfindung möglich. Die Erfindung soll demnach nicht nur auf das vorliegende Ausführungsbeispiel beschränkt sein.

## Patentansprüche

1. Vorrichtung zur Qualitätskontrolle bei thermogeformten Kunststoffteilen mit einer Lichtquelle (10), einem Detektor (12), einer Zuführeinrichtung (14) für das Kunststoffteil (16), womit das Kunststoffteil (16) an zumindest einer kritischen Stelle (18) zwischen der Lichtquelle (10) und dem Detektor (12) automatisch positionierbar ist und mit einer Auswertevorrichtung (20), die ein vom Detektor (12) stammendes Signal bewertet.

2. Vorrichtung nach Anspruch 1,
**dadurch gekennzeichnet,**
**dass** die Zuführeinrichtung (14) an einer Steuereinrichtung angeschlossen ist, mittels der das Kunststoffteil an zumindest zwei programmierbaren Stellen automatisch positionierbar ist.

3. Vorrichtung nach Anspruch 1 oder 2,
**dadurch gekennzeichnet,**
**dass** zumindest ein Bereich des zwischen Lichtquelle (10) und Detektor (12) positionierten Kunststoffteils abgefahren wird.

4. Vorrichtung nach einem der vorhergehenden Ansprüchen,
**dadurch gekennzeichnet,**
**dass** in Abhängigkeit von dem Detektorsignal eine Nachsteuerung der zwischen der Lichtquelle (10) und dem Detektor (12) positionierten Stelle erfolgt.

5. Vorrichtung nach einem der vorhergehenden Ansprüche
**dadurch gekennzeichnet,**
**dass** bei Über- oder Unterschreiten eines Schwellwertes des bewerteten Detektorsignals das Kunststoffteil (16) mittels der Zuführeinrichtung (14) aussortiert wird.
